# EUROPEAN PATENT SPECIFICATION

(11) **EP 1 798 264 B1**
(45) Date of publication and mention of the grant of the patent: **05.08.2009**
(21) Application number: 05790563.0
(22) Date of filing: 05.10.2005
(51) Int. Cl.: C09D 4/00, B05D 7/24, C09D 5/00, C09D 7/12

(54) **ACTIVE ENERGY RAY-CURABLE COATING COMPOSITION AND METHOD FOR FORMING COATING FILM**
AKTIVENERGIESTRAHLENHÄRTBARE BESCHICHTUNGSZUSAMMENSETZUNG UND VERFAHREN ZUR BESCHICHTUNGSFILMFORMUNG
PRÉPARATION ACTIVE DURCISSABLE PAR RAYONNEMENT POUR TRAITEMENT DE SURFACE ET MÉTHODE DE FORMATION D UNE PELLICULE DE SURFACE

(30) Priority: 06.10.2004 JP 2004293253
(43) Date of publication of application: 20.06.2007
(73) Proprietor: KANSAI PAINT CO., LTD., Amagasaki-shi, Hyogo-ken 661-8555 (JP)
(72) Inventor: KATOH, Hiromi c/o KANSAI PAINT CO., LTD., Nishikamo-gun Aichi 4700206 (JP); NAGANO, Hiroyuki c/o KANSAI PAINT CO., LTD.,, Nishikamo-gun Aichi 4700206 (JP); NAKAO, Yasushi c/o KANSAI PAINT CO., LTD., Nishikamo-gun Aichi 4700206 (JP)
(74) Representative: Kuhnen & Wacker
(86) International application number: PCT/JP2005/018439
(87) International publication number: WO 2006/038651

(56) References cited:
- EP-A- 0 899 269
- JP-A- 09 132 752
- JP-A- 2002 120 332
- JP-A- 2004 070 129
- Supervised by Yasukazu OKATSU, Gijutsu Kyoiku Shuppan Yugen Kaisha Hakko,"Kobunshi Kinokazai no Kiso to Oyo Gijutsu", 1st edition, 1st print, 01 October, 2000 (01.10.00), 9th Chapter, pages 203 to 209 XP002999205

## Description

The present invention relates to an active energy ray-curable coating composition and a method for forming a coating film.

### BACKGROUND ART

In recent years, aluminum substrates have been increasingly used to reduce the weight of automotive parts, automotive bodies, etc. Usually, a primer coating film, an intermediate coating film, if necessary, and an overcoating film are formed on an aluminum substrate for use in automotive parts, etc. In the formation of such a primer coating film, heat curable primer coating compositions have been heretofore used; however, in order to reduce the time of coating film curing process and the amount of thermal energy necessary, the use of an active energy ray-curable primer coating composition is proposed.

Japanese Unexamined Patent Publication No. 1992-22474 discloses a method for forming a coating film comprising the steps of forming an electrodeposition coating film on an automotive body or like metal substrate; forming a primer coating film using an ultraviolet ray-curable primer coating composition containing a film-forming resin having an ethylenic unsaturated bond and a photopolymerization initiator; and sequentially forming an intermediate coating film, if necessary, and an overcoating film.

However, the above-mentioned ultraviolet ray-curable primer coating composition is inferior to other known thermosetting primer coating compositions in terms of adhesion to an aluminum substrate that has been subjected to zinc phosphate treatment, zirconium phosphate treatment or like surface treatment.

### DISCLOSURE OF THE INVENTION

### PROBLEMS TO BE SOLVED BY THE INVENTION

An object of the present invention is to provide an active energy ray-curable coating composition that makes it possible to form a coating film having excellent adhesion to a surface-treated aluminum substrate.

Another object of the present invention is to provide a method for forming a coating film using the active energy ray-curable coating composition.

### MEANS FOR SOLVING THE PROBLEMS

The present inventors conducted extensive research to achieve the above objects, and found that the above objects can be achieved by using an active energy ray-curable coating composition containing a specific silane coupling agent and a specific chelate compound as a primer coating composition for a surface-treated aluminum substrate. The present invention has been accomplished based on this finding.

The present invention provides the following active energy ray-curable coating compositions and methods for forming a coating film.
1. A method for forming a coating film on an aluminium substrate that has been subjected to a surface treatment using an active energy ray-curable coating composition comprising:
   (A) a polymerizable unsaturated compound;
   (B) a photopolymerization initiator;
   (C) at least one silane coupling agent selected from the group consisting of amino group-containing silane coupling agents and mercapto group-containing silane coupling agents; and
   (D) at least one chelate compound selected from the group consisting of aluminum chelates and titanium chelates.
2. A method for forming a coating film on an aluminium substrate according to Item 1, wherein the number average molecular weight of the polymerizable unsaturated compound (A) is 50 to 3,000.
3. A method for forming a coating film on an aluminium substrate according to Item 1, wherein the number average molecular weight of the silane coupling agent (C) is 100 to 3,000.
4. A method for forming a coating film on an aluminium substrate according to Item 1, wherein the amount of the photopolymerization initiator (B) is 0.1 to 10 parts by weight per 100 parts by weight of the polymerizable unsaturated compound.
5. A method for forming a coating film on an aluminium substrate according to Item 1, wherein the amount of the silane coupling agent (C) is 0.1 to 20 parts by weight per 100 parts by weight of the polymerizable unsaturated compound.
6. A method for forming a coating film on an aluminium substrate according to Item 1, wherein the amount of the chelate compound (D) is 0.1 to 10 parts by weight per 100 parts by weight of the polymerizable unsaturated compound.
7. A method for forming a coating film on an aluminium substrate according to Item 7, wherein the surface treatment is a zinc phosphate treatment or a zirconium phosphate treatment.
8. A method for forming a primer coating film comprising the steps of:
   forming a primer coating film, or a primer coating film and an intermediate coating film on an aluminum substrate and forming an overcoating film,
   the active energy ray-curable coating composition being used as a primer coating composition for forming the primer coating film.
9. A method for forming a coating film according to Item 8, wherein the surface treatment is a zinc phosphate treatment or a zirconium phosphate treatment.

### Active energy ray-curable coating composition

The active energy ray-curable coating composition of the present invention comprises a polymerizable unsaturated compound (A), a photopolymerization initiator (B), a specific silane coupling agent (C) and a specific chelate compound (D).

### Polymerizable unsaturated compound (A)

The polymerizable unsaturated compound (A) has at least one polymerizable unsaturated bond in one molecule, and forms a coating film by being polymerized and cured by irradiation with an active energy ray. Compounds having 2 to 5 polymerizable unsaturated bonds per molecule are preferable.

Examples of polymerizable unsaturated compounds (A) are as given below. They may be used singly or in combination:
(1) esters of (meth)acrylic acids with C₁₋₂₂ monohydric alcohols, such as methyl (meth)acrylate, ethyl (meth)acrylate, propyl (meth)acrylate, butyl (meth)acrylate, hexyl (meth)acrylate, octyl (meth)acrylate, lauryl (meth)acrylate, and 2-ethylhexyl (meth)acrylate;
(2) monoesters or diesters of (meth)acrylic acids with C₂₋₂₀ glycols, such as ethylene glycol, propylene glycol, and butylene glycol;
(3) dicarboxylic acids, such as maleic acid, itaconic acid, fumaric acid, and mesaconic acid; and modified products (e.g., anhydrides, half estetrified products, etc.) of such dicarboxylic acids;
(4) C₂₋₁₈ alkoxyalkyl esters of (meth)acrylic acids, such as methoxybutyl (meth)acrylate, methoxyethyl (meth)acrylate, and ethoxybutyl (meth)acrylate;
(5) aminoacrylic monomers, such as aminoethyl (meth)acrylate, N,N-dimethylaminoethyl (meth)acrylate, N,N-diethylaminoethyl (meth)acrylate, and N-t-butyl aminoethyl (meth)acrylate;
(6) acrylamide monomers, such as (meth)acrylamide, N-methylol (meth)acrylamide, N-n-butoxymethyl (meth)acrylamide, N-methoxymethyl (meth)acrylamide, N-methyl (meth)acrylamide, N-ethyl (meth)acrylamide, and N,N-dimethyl (meth)acrylamide;
(7) glycidyl group-containing monomers, such as glycidyl (meth)acrylate;
(8) vinyl compounds, such as styrene, α-methyl styrene, vinyl toluene, acrylonitrile, vinyl acetate, vinyl chloride, and N-vinyl pyrrolidone;
(9) a phenol ethylene oxide modified acrylate represented by General Formula Ph-O-(C₂H₄O)n-OCHC=CH₂ (wherein Ph represents a phenyl group that may have an alkyl group with no more than 15 carbon atoms. n is an integer of 1 to 6.);
(10) poly(meth)acrylates, such as bisphenol A ethylene oxide modified di(meth)acrylate, isocyanuric acid ethylene oxide modified di(meth)acrylate, tripropylene glycol di(meth)acrylate, pentaerythritol di(meth)acrylate monostearate, tetraethylene glycol di(meth)acrylate, polyethyleneglycol di(meth)acrylate, polypropylene glycol di(meth)acrylate, pentaerythritol tri(meth)acrylate, trimethylolpropane tri(meth)acrylate, trimethylolpropane propylene oxide modified tri(meth)acrylate, isocyanuric acid ethylene oxide modified tri(meth)acrylate, trimethylolpropane ethylene oxide modified tri(meth)acrylate dipentaerythritol penta(meth)acrylate, dipentaerythritol hexa(meth)acrylate, pentaerythritol tetra(meth)acrylate, oligomers obtained by adding 2 moles of (meth)acrylic acid to each terminal hydroxyl group of the polyurethane, oligomers obtained by adding 2 or more moles of (meth)acrylic acid to terminal hydroxyl group(s) of the polyester, and compounds obtained by adding a hydroxyl group-containing (meth)acrylate monomer to isocyanate groups of multifunctional isocyanate compounds;
(11) mono(meth)acrylates of hydroxyl group-containing compounds, such as ω-carboxy-polycaprolactone mono(meth)acrylate, monohydroxyethyl phthalate (meth)acrylate, and 2-hydroxy-3-phenoxypropyl (meth)acrylate; and
(12) other compounds, such as acrylic acid dimers, and 2-ethylhexyl Carbitol (meth)acrylate.

In the present specification, "(meth)acrylate" means "acrylate or methacrylate".

The number average molecular weight of the polymerizable unsaturated compound (A) is preferably about 50 to about 3,000 in view of attaining excellent solubility, and more preferably about 100 to about 2,000.

### Photopolymerization initiator (B)

Photopolymerization initiator (B) accelerates the polymerization reaction and crosslinking reaction of polymerizable unsaturated compound (A) by irradiation with an active energy ray.

Examples of usable photopolymerization initiators (B) include benzoin, benzoinmethylether, benzoinethylether, 2-methyl benzoin, benzyl, benzyldimethylketal, diphenylsulfide, tetramethylthiuram monosulfide, diacetyl, eosin, thionine, Michler's ketone, anthracene, anthraquinone, acetophenone, α-hydroxyisobutyrophenone, p-isopropyl α-hydroxyisobutyrophenone, α,α'-dichloro-4-phenoxyacetophenone, 1-hydroxy-1-cyclohexylacetophenone, 2,2-dimethoxy-2-phenylacetophenone, methylbenzoylformate, 2-methyl-1-[4-(methylthio)phenyl]-2-morpholino-propene, thioxanthone, benzophenone, 2,2-dimethoxy-1,2-diphenylethane-1-on, 1-hydroxy-cyclohexyl-phenyl-ketone, 1-hydroxy-cyclohexyl-phenyl-ketone, 2-methyl-1-[4-(methylthio)phenyl]-2-morpholinopropanone, 1,2-benzyl-2-dimethylamino-1-(4-morpholinophenyl)-butanone, 1,2-hydroxy-2-methyl-1-phenyl-propane-1-on, 2,4,6-trimethylbenzoyldiphenyl-phosphineoxide, 1-[4-(2-hydroxyethoxy)-phenyl]-2-hydroxy-2-methyl-1-propane-1-on, bis(cyclopentadienyl)-bis(2,6-difluoro-3-(pyrrol-yl)titanium), 2-hydroxy-2-methyl-1-phenylpropane-1-on, bis-acylphosphineoxide, (η⁵-2,4-cyclopentadiene-1-yl) [(1,2,3,4,5,6-η)-(1-methylethyl)benzene]-iron(1+)-hexafluorophosphate(1-), etc.

The above-mentioned compounds may be used singly or in combination as a photopolymerization initiator.

The amount of the photopolymerization initiator (B) is preferably about 0.1 to about 10 parts by weight and more preferably about 0.5 to about 5 parts by weight per 100 parts by weight of polymerizable unsaturated compound (A) for attaining excellent curability.

### Silane coupling agent (C)

Silane coupling agent (C) improves adhesion of the coating film that is formed from the composition of the present invention. Amino group-containing silane coupling agents and mercapto group-containing silane coupling agents can be used in the present invention.

The amino group-containing silane coupling agents used in the present invention contain at least one amino group in the molecule, and the mercapto group-containing silane coupling agents used in the present invention contain at least one mercapto group in the molecule. The following compounds may be used singly or in combination as a silane coupling agent (C).

Examples of amino group-containing silane coupling agents include N-β-(aminoethyl)-γ-aminopropyltrimethoxy silane, N-β-(aminoethyl)-γ-aminopropylmethyldimethoxy silane, γ-aminopropyltrimethoxy silane, N-phenyl-γ-aminopropyltrimethoxy silane, etc.

Examples of mercapto group-containing silane coupling agents include γ-mercaptopropyltrimethoxy silane, 3-mercaptopropylmethyldimethoxy silane, etc.

The above-exemplified silane coupling agents are all monomer-type silane coupling agents; however, oligomer-type silane coupling agents may also be used. The use of oligomer-type silane coupling agents further improves adhesion of the coating film.

Commercially available products can be used as oligomer-type silane coupling agents. Examples of commercially available oligomer-type silane coupling agents include "KP-390" (product name: oligomer-type amino group-containing silane coupling agent; number average molecular weight of about 1,500; a product of Shin-Etsu Chemical Co., Ltd.), "KP-391" (product name: oligomer-type mercapto group-containing silane coupling agent; number average molecular weight of about 1,700; a product of Shin-Etsu Chemical Co., Ltd.), etc.

The number average molecular weight of the silane coupling agent (C) is preferably about 100 to about 3,000, and more preferably about 1,000 to about 2,000 in view of improving adhesion of the coating film.

The amount of the silane coupling agent (C) is preferably about 0.1 to about 20 parts by weight, more preferably about 0.5 to about 10 parts by weight, and further more preferably about 1 to about 5 parts by weight per 100 parts by weight of polymerizable unsaturated compound (A) in view of improving adhesion of the coating film.

### Chelate compound (D)

The chelate compound (D) promotes the action of the silane coupling agent (C) that improves adhesion of the coating film formed from the composition of the present invention. Aluminum chelates and titanium chelates can be used as the chelate compound (D). The compounds exemplified below can be used singly or in combination as the chelate compounds (D).

Examples of aluminum chelates include aluminum isopropylate, monosec-butoxy aluminum diisopropylate, aluminum sec-butylate, aluminum ethylate, aluminum acetoalkoxy diisopropylate, aluminum ethylacetoacetate diisopropylate, aluminum tris(ethylacetoacetate), aluminum alkylacetoacetate diisopropylate, aluminum monoacetyl acetonate bis(ethylacetoacetate), aluminum tris(acetylacetonate), cyclic aluminum oxide isopropylate, etc.

Examples of titanium chelates include diisopropoxy bis(ethylacetoacetate)titanate, diisopropoxy bis(acetylacetonato)titanate, di-n-butoxybis(acetylacetonato)titanate, etc.

The amount of the chelate compound (D) is preferably about 0.1 to about 10 parts by weight and more preferably about 0.5 to about 5 parts by weight per 100 parts by weight of polymerizable unsaturated compound (A) in view of improving adhesion of the coating film.

### Other components

A photosensitizer, a thermal polymerization initiator, a coating film-forming resin, etc., may be added to the essential components (A) to (D) of the coating composition of the present invention if necessary.

A photosensitizer is used together with a photopolymerization initiator in order to accelerate the photopolymerization reaction. Examples of such photosensitizers include triethylamine, triethanolamine, methyldiethanolamine, methyl 4-(dimethylamino)benzoate, ethyl 4-(dimethylamino)benzoate, isoamyl 4-(dimethylamino)benzoate, ethyl 2-(dimethylamino)benzoate, 4,4'-diethylaminobenzophenone and like tertiary amine compounds; triphenylphosphine and like alkylphosphine compounds; β-thiodiglycol and like thioether compounds; etc.

A thermal polymerization initiator is used for promoting the polymerization reaction and the crosslinking reaction of the polymerizable unsaturated compound contained in the primer coating film, etc., by heating, in the portion where the active energy ray was not irradiated or not satisfactorily irradiated. Examples of thermal polymerization initiators include benzoyl peroxide, dit-butylhydroperoxide, t-butylhydroperoxide, cumylperoxide, cumenehydroperoxide, diisopropylbenzene hydroperoxide, t-butylperoxybenzoate, laurylperoxide, acetylperoxide, t-butylperoxy-2-ethylhexanoate and like peroxides; and α,α'-azobisisobutyronitrile, azobisdimethylvaleronitrile, azobiscyclohexanecarbonitrile and like azo compounds.

When a thermal polymerization initiator is used, the amount is preferably about 0.1 to about 20 parts by weight and more preferably about 0.5 to about 10 parts by weight per 100 parts by weight of polymerizable unsaturated compound (A).

Examples of coating film-forming resins include those obtained by introducing an ethylenic unsaturated bond into base resins, such as polyester resins, acrylic resins, epoxy resins, that comprise a functional group and have a saturated bond as the skeleton thereof, by the reaction with a vinyl monomer having a functional group that can react with the function group in base resins, such as hydroxyl group-containing (meth)acrylic esters, (meth)acrylic acid, methylolacrylamide, and glycidyl (meth)acrylate.

Pigments, coating surface modifiers, antioxidants, fluidity adjusters, dispersing agents and like additives for coating compositions may be added to the coating composition of the present invention, if necessary, in such an amount that does not adversely affect the curability by irradiation with an active energy ray.

Examples of usable pigments include titanium oxides, zinc oxide, carbon black, cadmium red, molybdenum red, chrome yellow, chromium oxide, Prussian blue, cobalt blue, azo pigments, phthalocyanine pigments, quinacridone pigments, isoindoline pigments, vat pigments, perylene pigments and like coloring pigments; aluminum powder, mica powder, mica powder covered with titanium oxide and like metallic pigments; talc, clay, kaolin, baryta, barium sulfate, barium carbonate, calcium carbonate, silica, alumina white and like extender pigments.

When a pigment is used, the amount of the pigment is preferably about 1 to about 150 parts by weight and more preferably about 3 to about 100 parts by weight per 100 parts by weight of polymerizable unsaturated compound (A).

### Preparation of coating composition

The coating composition of the present invention can be obtained by, for example, mixing and dispersing a polymerizable unsaturated compound (A), a photopolymerization initiator (B), a silane coupling agent (C), a chelate compound (D), and, if necessary, a photosensitizer, a thermal polymerization initiator, a coating film-forming resin, a pigment, an additive for coating compositoins, etc., into an organic solvent. Examples of usable organic solvents include hydrocarbon solvents, ester solvents, ether solvents, alcohol solvents, ketone solvents, etc. The coating composition of the present invention can also be obtained in a form of a solvent-free coating composition by using a polymerizable unsaturated compound (A) as a reactive diluent.

### Method for forming a coating film

The coating composition of the present invention is applied to the surface of a substrate to be coated, such as a metal substrate and a plastic substrate, and then curing the applied coating composition to obtain a cured coating film.

The coating composition of the present invention can be suitably used as a coating composition to be applied to the surface of an aluminum substrate that has been subjected to a zinc phosphate treatment, a zirconium phosphate treatment or like surface treatment.

There is no limitation to the kind of aluminum substrate, and examples thereof include aluminum wheels, aluminum frames and like automotive parts; automotive outer panels; etc.

An aluminum wheel is a component for use in attaching automotive tires of passenger cars, trucks, four-wheel-drive ATVs, motorcycles, etc. The material of the aluminum wheel is generally an alloy containing aluminum as the main component and further containing magnesium, silicon, etc.

As for aluminum wheels, in view of reducing weight, improving designability, etc., those formed into desirable shapes by press molding, casting, etc., can be used. It is also possible to use those having several types of surfaces, such as a casting surface with projections and depressions obtained by shot blasting, a flat surface obtained by cutting, etc.

The surface treatment of the aluminum substrate usually comprises a degreasing step and a chemical conversion treatment step, wherein the chemical conversion treatment step is conducted after the degreasing step.

In the degreasing step, alkaline degreasing is usually employed. Alkaline degreasing is conducted using an aqueous alkaline solution containing an alkaline component and a surfactant, by dipping, spraying, etc. Examples of usable alkaline components include sodium hydroxide, sodium silicate, sodium carbonate, sodium phosphate, etc.

The chemical conversion treatment step is conducted to form a metal salt coating film on the aluminum substrate surface that has been cleaned in the degreasing step, in order to improve the corrosion resistance of the substrate. In the case of an aluminum substrate, usually, a treatment using zinc phosphate, zirconium phosphate, etc., is employed.

In application of the coating composition of the present invention to an aluminum substrate or like substrate, it is preferable that the coating composition be applied to the surface of the substrate by electrostatic coating, airless spraying, air spraying, etc., after adjusting the viscosity of the coating composition to be about 15 to about 60 seconds at 20°C as measured by Ford Cup No. 4, and the solids content to be about 40 to about 100 weight%. The thickness of the coating film is preferably about 10 to about 60 µm and more preferably about 15 to about 40 µm when cured.

The applied wet coating film may be cured by irradiating the film with an active energy ray, if necessary, after evaporating the organic solvents contained in the coating film at room temperature or by heating at a temperature not higher than 100°C. Curing by heating may be additionally employed if necessary.

Examples of the kinds of active energy ray include ultraviolet rays, sun rays, visible rays, X-rays, electron beams, ion beams, etc.

It is preferable to use ultraviolet rays as the active energy ray, and examples of ultraviolet ray generation apparatuses include a mercury lamp, high-voltage mercury lamp, super-high-voltage mercury lamp, xenon lamp, carbon arc, metal halide lamp, gallium lamp, chemical lamp, ultraviolet laser, etc.

The intensity of the active energy ray can be suitably selected depending on the kind of the active energy ray. The intensity of the ultraviolet rays is not limited; however, within the range of about 10 to about 2,000 mJ/cm² is preferable. It is preferable that irradiation with electron beams be conducted at an acceleration energy of about 50 to about 300 KeV with an intensity of about 1 to about 20 Mrad. Irradiation time of the ultraviolet rays or electron beams is preferably about 0.5 second to about 5 minutes. When it is necessary to cure a wet coating film by irradiation with an active energy ray, it is preferable that the curing be conducted under a nitrogen atmosphere or a carbon dioxide atmosphere.

The coating composition of the present invention can be suitably used as a primer coating composition for forming a primer coating film on an aluminum substrate that has been subjected to a zinc phosphate treatment, a zirconium phosphate treatment or like surface treatment. A multilayer coating film can be obtained by forming an intermediate coating film, if necessary, by applying an intermediate coating composition to the surface of the primer coating film formed by using the coating composition of the present invention, and then forming an overcoating film by applying an overcoating composition.

In terms of the coating film formation method using the coating composition of the present invention, it is preferable that the active energy ray-curable coating composition of the present invention be used as a primer coating composition for forming a primer coating film in a method comprising the steps of forming a primer coating film, or a primer coating film and an intermediate coating film on a surface-treated aluminum substrate, and then forming an overcoating film.

Thermosetting coating compositions containing a base resin, a crosslinking agent, a coloring pigment and a solvent can be used for the intermediate coating composition. Examples of base resins include acrylic resins, polyester resins, alkyd resins, fluoro resins, urethane resins, silicone-containing resins and like resins having a crosslinking functional group, such as hydroxyl group, carboxyl group, silanol group, and epoxy group. Examples of crosslinking agents include melamine resins, urea resins, polyisocyanate compounds, blocked polyisocyanate compounds, epoxy compounds, epoxy resins, carboxyl group-containing compounds, carboxyl group-containing resins, acid anhydrides, alkoxysilane group-containing compounds, alkoxysilane group-containing resins, etc., that can react with the functional group in the base resin.

Examples of coloring pigments include titanium oxide, zinc oxide, carbon black, cadmium red, molybdenum red, chrome yellow, chromium oxide, Prussian blue, cobalt blue, azo pigments, phthalocyanine pigments, quinacridone pigments, isoindoline pigments, vat pigments, perylene pigments and like pigments generally used for coating compositions. The amounts of these coloring pigments can be selected depending on the tone, etc., required for the coating film. Examples of usable solvents include, for example, hydrocarbon solvents, ester solvents, ether solvents, alcohol solvents, ketone solvents and like organic solvents generally used for coating compositions and/or water.

The intermediate coating composition can be obtained by mixing and dispersing these components. It is preferable that the intermediate coating composition have a solids concentration of about 40 to about 70 weight%, and a viscosity of about 15 to about 30 seconds at 20°C as measured by Ford Cup No. 4 when applied.

Coating and curing the intermediate coating film can be conducted by a known method, for example, by applying an intermediate coating composition, whose solids concentration and viscosity have been adjusted, to the surface of a primer coating film that has been irradiated with ultraviolet ray by electrostatic coating, airless spraying, air spraying, etc. The thickness of the coating film is preferably about 5 to about 50 µm and more preferably about 10 to about 30 µm when cured. A cured intermediate coating film can be formed by heating the applied intermediate coating composition at about 120 to about 160°C for about 10 to about 40 minutes, if necessary, after volatizing the solvent in the coating film, by heating it at about 60 to about 80°C for 10 minutes. During the process for curing this intermediate coating film, uncured or incompletely cured portions of the primer coating film can be cured at the same time.

In order to reduce the time of coating film curing process, etc., an active energy ray-curable coating composition may be used as the intermediate coating composition. Known coating.compositions can be used as an active energy ray-curable intermediate coating composition, and they may be coated and cured by a known method.

Subsequently, an overcoating film is formed by applying an overcoating composition to the surface of a primer coating film formed from the coating composition of the present invention or such primer coating film and the intermediate coating film on the substrate to be coated, such as an aluminum substrate.

Examples of usable overcoating compositions include solid color coating compositions, metallic coating compositions, and clear coating compositions. By suitably combining these overcoating compositions, a multilayer overcoating film with a solid color finish or metallic finish can be obtained.

As for the solid color coating composition, thermosetting coating compositions containing a base resin, a crosslinking agent, a coloring pigment and a solvent can be used. Examples of the base resins include acrylic resins, polyester resins, alkyd resins, fluoro resins, urethane resins, silicone-containing resins and like resins having a crosslinking functional group, such as hydroxyl group, carboxyl group, silanol group, and epoxy group. Examples of crosslinking agents include melamine resins, urea resins, polyisocyanate compounds, blocked polyisocyanate compounds, epoxy compounds, epoxy resins, carboxyl group-containing compounds, carboxyl group-containing resins, acid anhydrides, alkoxysilane group-containing compounds, alkoxysilane group-containing resins, etc., that can react with the functional group in the base resin.

Examples of usable coloring pigments include titanium oxide, zinc oxide, carbon black, cadmium red, molybdenum red, chrome yellow, chromium oxide, Prussian blue, cobalt blue, azo pigments, phthalocyanine pigments, quinacridone pigments, isoindoline pigments, vat pigments, perylene pigments and like pigments generally used for coating compositions. The amount of these coloring pigments can be suitably selected depending on the tone, etc., required for the coating film. Examples of usable solvents include hydrocarbon solvents, ester solvents, ether solvents, alcohol solvents, ketone solvents and like organic solvents generally used for coating compositions and/or water.

The solid color coating composition can be prepared by mixing and dispersing these components. It is preferable that the solid color coating composition have a solids concentration of about 40 to about 70 weight%, and a viscosity of about 15 to about 30 seconds at 20°C as measured by Ford Cup No. 4.

As for the above-mentioned metallic coating composition, a metallic coating composition comprising, for example, a base resin, a coloring pigment, a metallic pigment, a solvent, and, if necessary, a crosslinking agent, etc., can be used. Among these components, with regard to the base resins, crosslinking agents, coloring pigments and solvents, those usable for the solid color coating compositions can also be used. As for the metallic pigments, flaky aluminum, mica, mica covered with metaloxide, mica-like iron oxide, etc., can be used. The metallic coating composition can be prepared by mixing and dispersing these components. It is preferable that the metallic coating composition when applied have a solids concentration of about 15 to about 40 weight%, and a viscosity of about 12 to about 25 seconds at 20°C as measured by Ford Cup No. 4.

As for the clear coating composition, thermosetting coating compositions comprising a base resin, a crosslinking agent, a solvent, and, if necessary, a coloring pigment and a metallic pigment in such an amount that does not adversely affect the transparency can be used. Among these components, a base resin, a crosslinking agent, a coloring pigment and a solvent are the same as those exemplified in the solid color coating composition. With regard to the metallic pigments, those exemplified in the metallic coating composition can also be used. Clear coating compositions can be prepared by mixing and dispersing these components. It is preferable that the clear coating composition have a solids concentration of about 40 to about 70 weight%, and a viscosity of about 15 to about 40 seconds at 20°C as measured by Ford Cup No. 4 when applied.

Examples of preferable methods for forming an overcoating film using a solid color coating composition, a metallic coating composition and a clear coating composition are as follows:
(i) A one-coat one-bake method wherein an overcoating film is formed by applying a solid color coating composition to the surface of an intermediate coating film or a primer coating film irradiated with an ultraviolet ray, and then curing the solid color coating composition by heating.
(ii) A two-coat one-bake method wherein a solid color coating composition and a clear coating composition are applied to the surface of an intermediate coating film or a primer coating film irradiated with an ultraviolet ray, and simultaneously curing the two overcoating layers by heating.
(iii) A two-coat one-bake method wherein a metallic coating composition and a clear coating composition are applied to the surface of an intermediate coating film or a primer coating film irradiated with an ultraviolet ray, and simultaneously curing the two overcoating layers by heating.

In method (i), a solid color coating composition is applied to the surface of the intermediate coating film or primer coating film in such a manner that the film thickness is generally about 5 to about 50 µm, and preferably about 10 to about 30 µm when cured. Examples of coating methods include electrostatic coating, airless spraying, air spraying, etc. A single layer overcoating film can be formed by curing the coating film by heating at about 120 to about 160°C for about 10 to about 40 minutes, if necessary, after evaporating the solvent by heating at about 60 to about 80°C for about 10 minutes.

In method (ii), a solid color coating composition is applied to the surface of the intermediate coating film or the primer coating film in such a manner that the film thickness is generally about 5 to about 50 µm, and preferably about 10 to about 30 µm when cured. Subsequently, a clear coating composition is applied in such a manner that the film thickness is generally about 10 to about 80 µm, and preferably about 20 to about 50 µm when cured, if necessary, after evaporating the solvent by heating at about 60 to about 80°C for about 10 minutes. Examples of methods for coating these coating compositions include electrostatic coating, airless spraying, air spraying, etc. A two-layer overcoating film can be formed by simultaneously curing the solid color coating film and clear coating film by heating at about 120 to about 160°C for about 10 to about 40 minutes, if necessary, after evaporating the solvent, by heating at about 60 to about 80°C for about 10 minutes.

In method (iii), a metallic coating composition is applied to the surface of the intermediate coating film or the primer coating film in such a manner that the film thickness is generally about 10 to about 50 µm, and preferably about 15 to about 35 µm when cured. Subsequently, a clear coating composition is applied in such a manner that the film thickness is generally about 10 to about 80 µm, and preferably about 20 to about 50 µm when cured, if necessary, after evaporating the solvent, by heating at about 60 to about 80°C for about 10 minutes. Examples of methods for coating these coating compositions include electrostatic coating, airless spraying, air spraying, etc. A two-layer overcoating film can be formed by simultaneously curing the metallic coating film and a clear coating film by curing the coating film by heating at about 120 to about 160°C for about 10 to about 40 minutes, if necessary, after evaporating the solvent by heating, at about 60 to about 80°C for about 10 minutes.

During the heat-curing process in methods (i) to (iii), uncured or incompletely cured portions of the primer coating film or the primer coating film and the intermediate coating film can be cured simultaneously with the overcoating film.

It is also possible to use an active energy ray-curable overcoating composition to improve the surface-hiding power and to reduce the time of coating film curing process. A known active energy ray-curable overcoating composition can be used, and coating and curing thereof can be conducted by a known method.

### EFFECTS OF THE INVENTION

The present invention can achieve the following remarkable effects.
(1) A coating film having excellent adhesion to an aluminum substrate whose surface has been treated with zinc phosphate, zirconium phosphate, etc., can be obtained by using the active energy ray-curable coating composition of the present invention and by employing a coating film formation method using the coating composition of the present invention as a primer coating composition.
   Adhesion to a surface-treated aluminum substrate is improved probably because of the condensation reaction of a silane group in a silane coupling agent with adsorbed water or a hydroxyl group exists in the treated surface of the substrate, achieving an anchor effect; an amino group and a mercapto group in the silane coupling agent serving as an adhesive functional group to the substrate surface; a chelate compound accelerating the condensation reaction by lowering the activation energy of the condensation reaction; etc.
(2) Because the active energy ray-curable coating composition of the present invention can be cured by irradiation with an active energy ray, the time of coating film curing process and the amount of thermal energy necessary can be reduced. Furthermore, the active energy ray-curable coating composition of the present invention exhibits a better surface-hiding power than a thermosetting coating composition.

### BEST MODE FOR CARRYING OUT THE INVENTION

The present invention is illustrated in more detail below with reference to Examples and Comparative Examples. However, the scope of the present invention is not limited to the following Examples. In each Example, "part" and "%" indicate "part by weight" and "weight%" respectively. The film thickness is on a cured basis.

In the coating film performance tests, Examples, and Comparative Examples described below, aluminum plates having a size of 300 mm (length) x 100 mm (width) x 2 mm (thickness) that had been subjected to alkaline degreasing and then a zinc phosphate treatment were used as aluminum substrates to be coated.

### Preparation of ultraviolet ray-curable coating composition

### Example 1

An oligomer (number average molecular weight of 1,455, having two polymerizable double bonds per molecule, 30 parts) obtained by adding a hydroxyl group-containing acrylic monomer (product name: "FA-2", a product of Daicel Chemical Industries Ltd.) to a trifunctional isocyanate compound (product name: "Sumidur N-3300", isocyanurate-type isocyanate compound, a product of Sumitomo Bayer Urethane Co., Ltd.); 30 parts of pentaerythritoltriacrylate; 40 parts of polyethyleneglycoldiacrylate; 0.5 part of 1-hydroxy-cyclohexyl-phenyl-ketone (a photopolymerization initiator); 3 parts of 2,4,6-trimethylbenzoyl-diphenyl-phosphine oxide (a photopolymerization initiator); 5 parts of 3-aminopropyltrimethoxysilane (an amino group-containing silane coupling agent), 5 parts of aluminum chelate compound (product name: "Plenact AL-M", acetoalkoxy-aluminum diisopropylate, a product of Kawaken Fine Chemicals Co., Ltd.) and 20 parts of talc No.1 (an extender pigment, a product of Takehara Kagaku Kogyo Co., Ltd.) were mixed and dispersed in a solvent mixture containing an equal weight of xylene and an aromatic hydrocarbon solvent (product name: "Swazole 1500", a product of Cosmo Oil Co., Ltd.). The obtained mixture was adjusted to have a viscosity of 25 seconds at 20°C as measured by Ford Cup No. 4, preparing ultraviolet ray-curable coating composition (I-1).

### Example 2

Ultraviolet ray-curable coating composition (I-2) was prepared in the same manner as in Example 1 except for using the same amount of 3-mercaptopropyltrimethoxy silane (a mercapto group-containing silane coupling agent) in place of 3-aminopropyltrimethoxysilane.

### Example 3

Ultraviolet ray-curable coating composition (I-3) was prepared in the same manner as in Example 1 except for using the same amount of oligomer-type amino group-containing silane coupling agent (product name: "KP-390", number average molecular weight of about 1,500, a product of Shin-Etsu Chemical Co., Ltd.) in place of 3-aminopropyltrimethoxysilane.

### Example 4

Ultraviolet ray-curable coating composition (I-4) was prepared in the same manner as in Example 1 except for using the same amount of oligomer-type mercapto group-containing silane coupling agent (product name: "KP-391", number average molecular weight of about 1,700, a product of Shin-Etsu Chemical Co., Ltd.) in place of 3-aminopropyltrimethoxysilane.

### Comparative Example 1

Ultraviolet ray-curable coating composition (1-5) was prepared in the same manner as in Example 1 except for using the same amount of 3-glycidoxypropyltrimethoxysilane (an epoxy group-containing silane coupling agent) in place of 3-aminopropyltrimethoxysilane.

### Comparative Example 2

Ultraviolet ray-curable coating composition (I-6) was prepared in the same manner as in Example 1 except for using the same amount of oligomer-type epoxy group-containing silane coupling agent (product name: "KP-392", number average molecular weight of about 2,500, a product of Shin-Etsu Chemical Co., Ltd.) in place of 3-aminopropyltrimethoxysilane.

### Comparative Example 3

Ultraviolet ray-curable coating composition (I-7) was prepared in the same manner as in Example 1 except for using the same amount of vinyltrimethoxysilane (a vinyl group-containing silane coupling agent) in place of 3-aminopropyltrimethoxysilane.

### Comparative Example 4

Ultraviolet ray-curable coating composition (I-8) was prepared in the same manner as in Example 1 except for using the same amount of 3-isocyanatepropyltriethoxysilane (an isocyanate group-containing silane coupling agent) in place of 3-aminopropyltrimethoxysilane.

### Coating Film Performance Test 1

Each of the ultraviolet ray-curable coating compositions (I-1) to (I-8) was applied to the surface of the surface-treated aluminum substrate using an air spray in such a manner that the film thickness was 35 µm, allowed to stand at room temperature for 3 minutes, and then preheated at 80°C for 3 minutes. Subsequently, a coated test piece of each ultraviolet ray-curable coating composition (I-1) to (I-8) was prepared by irradiating the preheated coated surface with an ultraviolet ray (peak wavelength: 365 nm) for 30 seconds at an intensity of 2,000 mJ/cm² using a metal halide lamp to cure the coating film.

Using each coated test piece prepared above, adhesion of the coating film to each aluminum substrate was measured by the following method.

Adhesion: Incisions were made in the surface of the coating film on each test piece using a cutter knife so that the cut reaches the substrate surface, forming 100 grids of 1 mm x 1 mm. An adhesive tape was applied to the cross-cut surface and rapidly peeled off, and the coated surface was then observed to determine the number of cross-cuts that remained on the surface. The more cross-cuts remain, the better the adhesion properties should be.

Table 1 shows the results.

**Table 1**

| | Example | | | | Comparative Example | | | |
|---|---|---|---|---|---|---|---|---|
| | 1 | 2 | 3 | 4 | 1 | 2 | 3 | 4 |
| Ultraviolet ray-curable coating composition | I-1 | I-2 | I-3 | I-4 | I-5 | I-6 | I-7 | I-8 |
| Adhesion | 100 | 100 | 100 | 100 | 0 | 21 | 92 | 0 |

### Coating film formation method

### Example 5

Ultraviolet ray-curable coating composition (I-1) obtained in Example 1 was applied to the surface of the surface-treated aluminum substrate as a primer coating composition using an air spray in such a manner that the film thickness was 35 µm, allowed to stand at room temperature for 3 minutes, and then subjected to preheating at 80°C for 3 minutes. The primer-coated surface was then irradiated with an ultraviolet ray (peak wavelength: 365 nm) for 30 seconds at an intensity of 2,000 mJ/cm² using a metal halide, lamp, curing the coated film.

Subsequently, intermediate coating composition (II-1)(product name: "Amilack TP-65-2 gray", a product of Kansai Paint Co., Ltd., a polyester resin/melamine resin thermosetting intermediate coating composition) was applied to the primer-coated surface by air spray coating in such a manner that the film thickness was 25 µm and cured by heating at 140°C for 30 minutes.

Subsequently, overcoating composition (III-1) (product name: "US300 black", a product of Kansai Paint Co., Ltd., an acrylic resin/melamine resin thermosetting solid color overcoating composition) was applied to the intermediate-coated surface in such a manner that the film thickness was 40 µm and then cured by heating at 140°C for 30 minutes, obtaining a coated test piece.

### Example 6

After coating and curing the intermediate coating composition in the same manner as in Example 5, overcoating composition (III-2) (product name: "TB-510 silver", a product of Kansai Paint Co., Ltd., an acrylic resin/melamine resin thermosetting metallic overcoating composition) was applied to the intermediate-coated surface in such a manner that the film thickness was 15 µm, and overcoating composition (III-3) (product name: "TC-71", a product of Kansai Paint Co., Ltd., an acrylic resin/melamine resin thermosetting clear overcoating composition) was then applied in such a manner that the film thickness was 35 µm by wet-on-wet coating. Subsequently, these coating films were simultaneously cured by heating at 140°C for 30 minutes, obtaining a coated test piece.

### Example 7

A coated test piece was prepared in the same manner as in Example 6 except for using ultraviolet ray-curable coating composition (1-2) prepared in Example 2 in place of ultraviolet ray-curable coating composition (I-1).

### Comparative Example 5

A coated test piece was prepared in the same manner as in Example 6 except for using ultraviolet ray-curable coating composition (I-8) prepared in Comparative Example 4 in place of ultraviolet ray-curable coating composition (I-1).

### Coating Film Performance Test 2

After dipping the coated test pieces obtained in Examples 5 to 7 and Comparative Example 5 described above into distilled water at 80°C for 5 hours, adhesion of the coating film of each test piece to the aluminum substrate was evaluated. The test method was the same as that described in Coating Film Performance 1. Table 2 shows the results.

**Table 2**

| | Ex. 5 | Ex. 6 | Ex. 7 | Comp. Ex.5 |
|---|---|---|---|---|
| Ultraviolet ray-curable coating composition | I-1 | I-1 | I-2 | I-8 |
| Intermediate coating composition | II-1 | II-1 | II-1 | II-1 |
| Overcoating composition | III-1 | III-2 III-3 | III-2 III-3 | III-2 III-3 |
| Adhesion | 100 | 100 | 100 | 94 |

## Claims

1. A Method for forming a coating film on an aluminum substrate that has been subjected to a surface treatment using an active energy ray-curable coating composition comprising:
(A) a polymerizable unsaturated compound;
(B) a photopolymerization initiator;
(C) at least one silane coupling agent selected from the group consisting of amino group-containing silane coupling agents and mercapto group-containing silane coupling agents; and
(D) at least one chelate compound selected from the group consisting of aluminum chelates and titanium chelates.

2. A Method for forming a coating film on an aluminum substrate according to Claim 1, wherein the number average molecular weight of the polymerizable unsaturated compound (A) is 50 to 3,000.

3. A Method for forming a coating film on an aluminum substrate according to Claim 1, wherein the number average molecular weight of the silane coupling agent (C) is 100 to 3,000.

4. A Method for forming a coating film on an aluminum substrate according to Claim 1, wherein the amount of the photopolymerization initiator (B) is 0.1 to 10 parts by weight per 100 parts by weight of the polymerizable unsaturated compound.

5. A Method for forming a coating film on an aluminum substrate according to Claim 1, wherein the amount of the silane coupling agent (C) is 0.1 to 20 parts by weight per 100 parts by weight of the polymerizable unsaturated compound.

6. A Method for forming a coating film on an aluminum substrate according to Claim 1, wherein the amount of the chelate compound (D) is 0.1 to 10 parts by weight per 100 parts by weight of the polymerizable unsaturated compound.

7. A Method for forming a coating film on an aluminum substrate according to Claim 1, wherein the surface treatment is a zinc phosphate treatment or a zirconium phosphate treatment.

8. A method for forming a primer coating film according to claim 1, comprising the steps of:
forming a primer coating film, or a primer coating film and an intermediate coating film on an aluminum substrate; and forming an overcoating film,
the active energy ray-curable coating composition according to claim 1 being used as a primer coating composition for forming the primer coating film.

9. A method for forming a primer coating film according to Claim 8, wherein the surface treatment is a zinc phosphate treatment or a zirconium phosphate treatment.

## Patentansprüche

1. Verfahren zum Bilden eines Beschichtungsfilms auf einem Aluminium-Trägermaterial, welches einer Oberflächenbehandlung unter Verwenden einer Wirkenergiestrahlen härtbaren Beschichtungszusammensetzung unterzogen wurde, umfassend:
(A) eine polymerisierbare ungesättigte Verbindung;
(B) einen Photopolymerisationsinitiator
(C) wenigstens ein Silan-Kupplungsagens, ausgewählt aus der Gruppe, bestehend aus Aminogruppen enthaltenden Silan-Kupplungsagentien und Mercaptogruppen enthaltenden Silan-Kupplungsagentien; und
(D) wenigstens eine Chelatverbindung, ausgewählt aus der Gruppe, bestehend aus Aluminiumchelaten und Titanchelaten.

2. Verfahren zum Bilden eines Beschichtungsfilms auf einem Aluminium-Trägermaterial nach Anspruch 1, wobei das zahlengemittelte Molekulargewicht der polymerisierbaren ungesättigten Verbindung (A) 50 bis 3000 beträgt.

3. Verfahren zum Bilden eines Beschichtungsfilms auf einem Aluminium-Trägermaterial nach Anspruch 1, wobei das zahlengemittelte Molekulargewicht des Silan-Kupplungsagens (C) 100 bis 3000 beträgt.

4. Verfahren zum Bilden eines Beschichtungsfilms auf einem Aluminium-Trägermaterial nach Anspruch 1, wobei die Menge des Photopolymerisationsinitiators (B) 0,1 bis 10 Gewichtsanteile auf 100 Gewichtsanteile der polymerisierbaren ungesättigten Verbindung beträgt.

5. Verfahren zum Bilden eines Beschichtungsfilms auf einem Aluminium-Trägermaterial nach Anspruch 1, wobei die Menge des Silan-Kupplungsagens (C) 0,1 bis 20 Gewichtsanteile auf 100 Gewichtsanteile der polymerisierbaren ungesättigten Verbindung beträgt.

6. Verfahren zum Bilden eines Beschichtungsfilms auf einem Aluminium-Trägermaterial nach Anspruch 1, wobei die Menge der Chelatverbindung (D) 0,1 bis 10 Gewichtsanteile auf 100 Gewichtsanteile der polymerisierbaren ungesättigten Verbindung beträgt.

7. Verfahren zum Bilden eines Beschichtungsfilms auf einem Aluminium-Trägermaterial nach Anspruch 1, wobei die Oberflächenbehandlung eine Zinkphosphat-Behandlung oder eine Zirkoniumphosphat-Behandlung ist.

8. Verfahren zum Bilden eines Grundierungs-Beschichtungsfilms nach Anspruch 1, umfassend die Schritte:
Bilden eines Grundierungs-Beschichtungsfilms oder eines Grundierungs-Beschichtungsfilms und eines Zwischenbeschichtungsfilms auf einem Aluminium-Trägermaterial; und Bilden eines Überzugsfilms, wobei die Wirkenergie-Strahlen härtbare Beschichtungszusammensetzung nach Anspruch 1 als Grundierungs-Beschichtungszusammensetzung zum Bilden des Grundierungs-Beschichtungsfilms verwendet wird.

9. Verfahren zum Bilden eines Grundierungs-Beschichtungsfilms nach Anspruch 8, wobei die Oberflächenbehandlung eine Zinkphosphat-Behandlung oder eine Zirkoniumphosphat-Behandlung ist.

## Revendications

1. Procédé de formation d'un film de revêtement sur un substrat en aluminium qui a été soumis à un traitement de surface en utilisant une composition de revêtement durcissable par rayonnement à l'énergie active, comprenant :
(A) un composé insaturé polymérisable ;
(B) un initiateur de photopolymérisation ;
(C) au moins un agent de couplage au silane sélectionné dans le groupe constitué par les agents de couplage au silane contenant des groupes amino et les agents de couplage au silane contenant des groupes mercapto ; et
(D) au moins un chélate choisi dans le groupe constitué par les chélates d'aluminium et les chélates de titane.

2. Procédé de formation d'un film de revêtement sur un substrat en aluminium selon la revendication 1, dans lequel le poids moléculaire moyen en nombre du composé insaturé polymérisable (A) est de 50 à 3 000.

3. Procédé de formation d'un film de revêtement sur un substrat en aluminium selon la revendication 1, dans lequel le poids moléculaire moyen en nombre de l'agent de couplage au silane (C) est de 100 à 3 000.

4. Procédé de formation d'un film de revêtement sur un substrat en aluminium selon la revendication 1, dans lequel la quantité de l'initiateur de photopolymérisation (B) est de 0,1 à 10 parties en poids pour 100 parties en poids du composé insaturé polymérisable.

5. Procédé de formation d'un film de revêtement sur un substrat en aluminium selon la revendication 1, dans lequel la quantité de l'agent de couplage au silane (C) est de 0,1 à 20 parties en poids pour 100 parties en poids du composé insaturé polymérisable.

6. Procédé de formation d'un film de revêtement sur un substrat en aluminium selon la revendication 1, dans lequel la quantité du chélate (D) est de 0,1 à 10 parties en poids pour 100 parties en poids du composé insaturé polymérisable.

7. Procédé de formation d'un film de revêtement sur un substrat en aluminium selon la revendication 1, dans lequel le traitement de surface est un traitement au phosphate de zinc ou un traitement au phosphate de zirconium.

8. Procédé de formation d'un film de revêtement d'accrochage selon la revendication 1, comprenant les étapes consistant à :
■ former un film de revêtement d'accrochage, ou un film de revêtement d'accrochage et un film de revêtement intermédiaire sur un substrat en aluminium ; et former un film de sur-revêtement,
■ la composition de revêtement durcissable par rayonnement à l'énergie active selon la revendication 1 étant utilisée comme composition de revêtement d'accrochage pour former le film de revêtement d'accrochage.

9. Procédé de formation d'un film de revêtement d'accrochage selon la revendication 8, dans lequel le traitement de surface est un traitement au phosphate de zinc ou un traitement au phosphate de zirconium.
